# EUROPEAN PATENT SPECIFICATION

(11) **EP 3 380 550 B1**
(45) Date of publication and mention of the grant of the patent: **27.05.2020**
(21) Application number: 16819651.7
(22) Date of filing: 25.11.2016
(51) Int. Cl.: B08B 3/04, B08B 13/00, B29B 17/02, B29K 67/00, G01G 17/06, B03B 11/00, G01G 13/22, G01G 17/04, G01G 13/00

(54) **METHOD AND APPARATUS FOR DOSING ONE OR MORE TREATMENT SUBSTANCES IN A SYSTEM FOR WASHING AND RECYCLING PLASTICS.**
VERFAHREN UND VORRICHTUNG ZUM DOSIEREN EINER ODER MEHRERER BEHANDLUNGSSUBSTANZEN IN EINEM SYSTEM ZUM WASCHEN UND RECYCLING VON KUNSTSTOFFEN
PROCÉDÉ ET APPAREIL DE DOSAGE D'UNE OU PLUSIEURS SUBSTANCES DE TRAITEMENT DANS UN SYSTÈME DE LAVAGE ET DE RECYCLAGE DE PLASTIQUES

(30) Priority: 25.11.2015 IT UB20155870
(43) Date of publication of application: 03.10.2018
(73) Proprietor: Previero N. S.r.l., 20851 Lissone (Monza Brianza) (IT)
(72) Inventor: PREVIERO, Flavio, 20851 Lissone, Monza Brianza (IT)
(74) Representative: Candito, Rocco
(86) International application number: PCT/IB2016/001671
(87) International publication number: WO 2017/089883

(56) References cited:
- WO-A1-01/21373
- GB-A- 1 518 972
- US-A- 1 416 312
- US-A- 3 486 648

## Description

### BACKGROUND OF THE INVENTION

The invention relates to a method and apparatus for dosing one or more substances for treating plastics, in particular for dosing at least one liquid detergent in a system for washing and recycling plastics, such as PET for example.

### PRIOR ART

In the plastics recycling field, in particular the field of recycling post-consumer containers or bottles made of PET, it is known to subject the containers first to a pre-washing step with possible removal of the labels and subsequently to a grinding step in which the containers are reduced into flakes of small dimensions. These flakes are in turn washed further in suitable apparatuses forming part of an entire recycling system in order to remove from the flakes the contaminants and/or solid particles adhering thereto.

The flakes of plastics, which have to be subjected to a washing process, are supplied to special washing modules, where they are subjected to a hydraulic and mechanical action of a flow of water heated to a temperature, for example of 60-70°C. A chemical solution is then added to the water to enable the flakes of plastics to be both washed and moved. In order to ensure correct and efficient operation of the washing system, it is extremely important to eliminate thoroughly the aforesaid contaminants and solid particles. As the continuous removal of the contaminating material entails progressive clouding of the water and rapid depletion of the chemical solution for washing, after a certain work time it is necessary to replace a great part of the depleted water with other water taken from the mains water supply that has to be suitably heated and supplemented with a new quantity of suitably dosed chemical solution for washing. In order to dose the chemical solution, it is known to use systems having sophisticated but equally delicate measuring apparatuses based on flowmeter sensors, flowrate meters, and volumetric pumping members, the use of which in the ambit of washing plastics to be recycled is accompanied by non-simple management and control of the dosing operations, and by very high costs.

In other sectors, for example the food and agricultural sector, dosing systems are known that provide containers for receiving the product to be dosed or measured, and suitable motors, devices-actuators and/or locking-releasing members that are driven to cause the aforesaid containers to move from a loading position to an unloading position of the aforesaid substance.

All the dosing systems disclosed above, in addition to being rather complex and costly, also prove to be equally delicate and require frequent maintenance, because of the heavy duty conditions in which they operate that are due to a work environment that is highly corrosive and characterised by a significant presence of dust or contaminating substances, as occurs in the field of treating and recycling plastics.

GB 1518972A discloses a machine for proportioning materials by weight prior to mixing thereof, comprising a hopper and a weighing container movable between a filling position, a holding position and a discharge position.

US 1416312A discloses an apparatus for weighing liquid products, having two tiltably mounted weighing troughs which are alternately filled and discharged.

### OBJECTS OF THE INVENTION

The general object of the present invention is to provide a method and an apparatus for dosing one or more substances for treating plastics, which method and apparatus are able to overcome the drawbacks of the systems that are commonly in use and are *per se* known.

In particular, one object of the present invention is to provide a different dosing method and apparatus, which enable, in an extremely simply but equally effective and reliable manner, detergents or chemical substances to be dosed in a system for washing and recycling plastics.

Another object of the invention is to provide a dosing apparatus that is extremely simplified, both from the structural and the functional point of view, thus having great operational reliability and being financially very advantageous from the point of view of production, management and maintenance costs.

In other words, the invention proposes supplying an apparatus that is as simplified as possible, thus being of advantageous use in corrosive environments, and at the same time ensuring satisfactory operating efficacy and precision and an equally great versatility of use with the possibility of adjusting in the desired manner doses of the treatment substances intended for delivery into the plastics washing and recycling line.

### SHORT DESCRIPTION OF THE INVENTION

These objects and further advantages of the invention are achievable by a method according to claim 1, and by an apparatus according to claim 7.

In particular, according to the present invention a method has been provided for dosing one or more treatment substances in a system for washing and recycling plastics, comprising the steps of:
a) providing a container supported in a freely oscillating manner and operationally connected to a programmable weighing and control unit, said container being overturnable by gravity between a loading position and an unloading position of said one or more treatment substances;
b) storing in said weighing and control unit a reference value of a weight which is suitable for overturning said container to said unloading position;
c) supplying a first treatment substance to said container detecting the weight thereof, and stopping the supply of said substance upon reaching a preset weight value; and
d) supplying a washing substance to said container until said reference value is reached, causing said container to overturn through the force of gravity in said unloading position for unloading and sending said treatment substance to plastics washing modules included in said system.

In a version of the method, after step c) and before step d), a step c') is provided of further supplying a second treatment substance to the container and interrupting this further supplying when a further preset weight value is reached. The step d) follows of supplying the washing substance, which comprises in particular water taken from the mains water supply, to reach the aforesaid weight reference value and cause the container to overturn. The two treatment substances comprise, in particular, one liquid detergent and caustic soda, or anyway further treatment substances that are required for processing the plastics to be recycled.

According to another aspect of the invention, an apparatus is provided for dosing one or more treatment substances in a system for washing and recycling plastics, by the aforesaid method, comprising:
- a container supported in a freely oscillating manner and overturnable by gravity from a loading position to an unloading position of said one or more treatment substances when a reference weight value is reached,
- a programmable weighing and control unit, operationally connected to said container and comprising weight sensor means supporting said container,
- a supply unit operationally connected to said programmable weighing and control unit and configured for selectively supplying to said container dosed quantities of one or more treatment substances and a washing substance;
- said programmable weighing and control unit being configured for initially activating said supply unit for supplying and detecting the weight of a first quantity of treatment substance in said container, arresting the supply when a preset weight value is reached, and subsequently activating said supply unit for supplying to said container a quantity of washing substance until said reference value is reached to cause the overturning by gravity of said container to said unloading position.

In one embodiment, the apparatus further comprises position sensor means, such as one or more inductive proximity switches or other suitable switches, operationally connected to the programmable weighing and control unit and configured for monitoring the oscillating movement of the container following unloading of the contents thereof and providing a reference signal indicating the arrest of the container in the loading position to enable the receipt and loading of a further dose of the treatment substance/s.

Advantages and further features will be found in the following description and in the attached claims and drawings.

### SHORT DESCRIPTION OF THE DRAWINGS

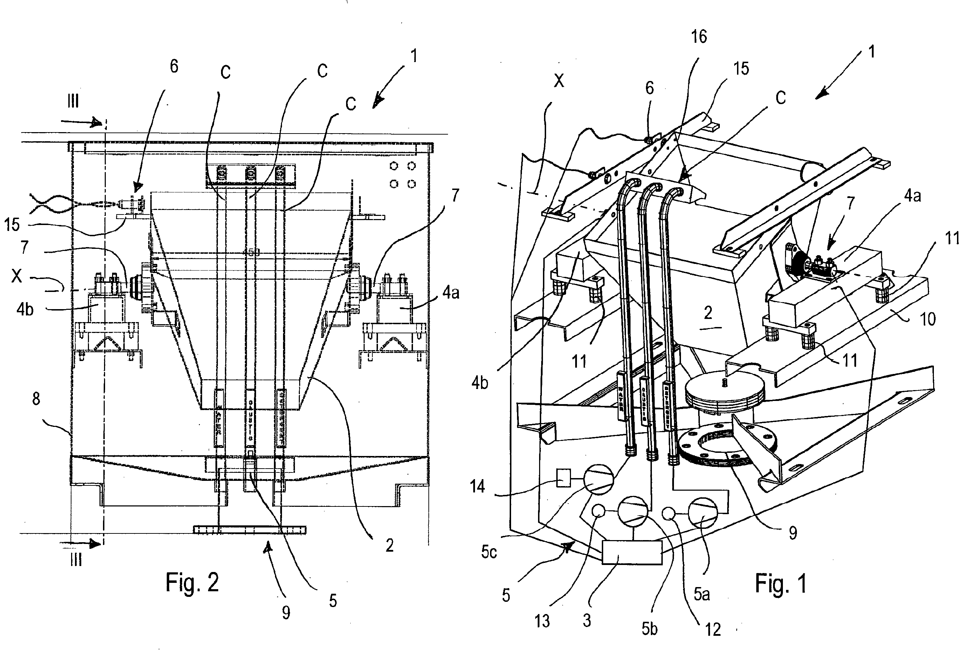

Figure 1 is a perspective view of the apparatus according to the invention, where for the sake of clarity some parts have been removed, such as the outer casing;
Figure 2 is another view of the apparatus, in which the parts inside the casing have been made visible from the exterior;

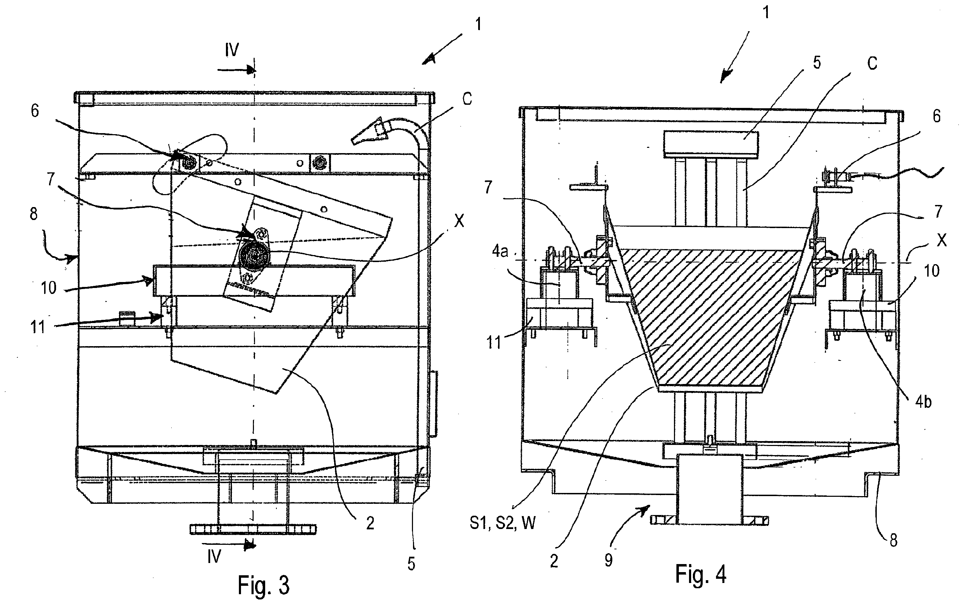

Figure 3 is a section view of the apparatus taken along the plane III-III in Figure 2;
Figure 4 is a section view of the apparatus taken along the plane IV-IV in Figure 3;
Figure 5 is a side view of the apparatus without some parts that have been removed for the sake of greater clarity, in which the container is in a loading position of the substances to be dosed;
Figure 6 is a similar view to that of Figure 5 but with the container in an unloading position of the dosed substances;
Figure 7 shows a block diagram of the method and of the operation of the apparatus according to the invention.

### DETAILED DESCRIPTION OF THE INVENTION

With reference to the attached figures, an apparatus 1 according to the invention is disclosed, which is suitable for dosing one or more treatment substances S1, S2, in a system for washing and recycling plastics, in particular and in a non-limiting manner, PET in flakes, obtained from bottles or other types of containers or products made of plastics arising from POST-consumption.

The apparatus 1 comprises a container 2 that is supported in a freely oscillating manner and is rotatable around a horizontal rotation axis X, and enclosed by a tank casing 8.

The tank casing 8 is provided below with an opening 9 for draining the content S1, S2, W from the container 2 to special plastics washing modules that are part of the entire recycling system.

The container 2 is mounted rotatably by suitable rotation pins 7, on a supporting structure 10 provided inside the tank casing 8.

The container 2 is configured and mounted in such a manner as to be overturnable by gravity from a loading position PI of the treatment substance/s S1, S2, to an unloading position P2 of the latter once a weight reference value V_{R} has been reached. In other words, the container 2 is so arranged that the horizontal rotation axis X is placed above and in an eccentric position in relation to the centre of gravity B1 of the empty container 2. The container 2 is mounted in such a manner that when a determined weight reference value V_{R} is reached it overturns independently without the help of any driving member.

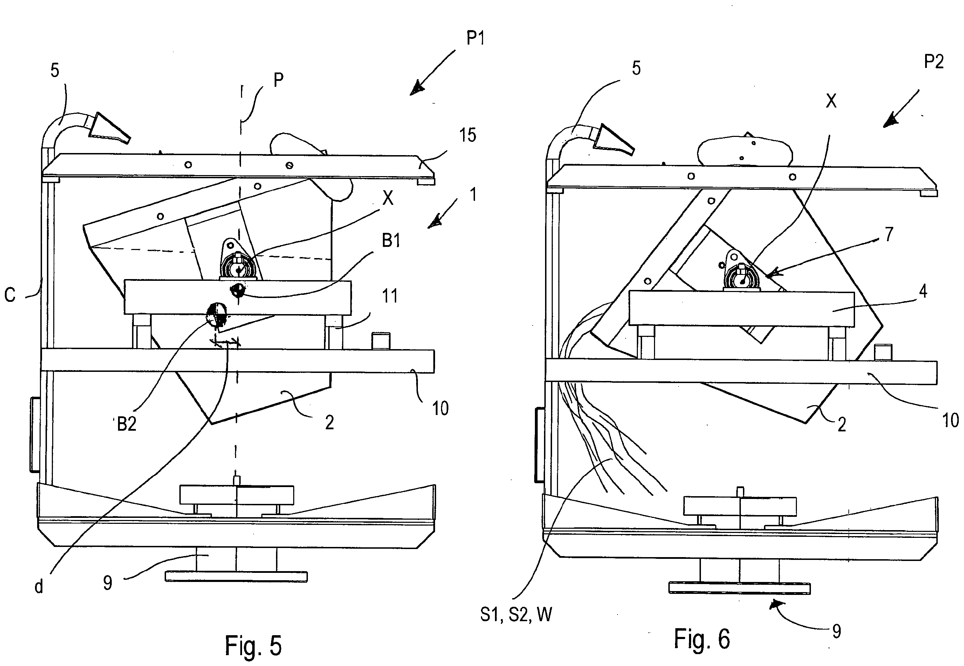

In other words, when the container 2 is filled with the required controlled doses of treatment substances and the remaining part of water, a new centre of gravity B2 is obtained (thus of the container 2 in a filled condition) which is spaced apart, by an amount "d" (shown in Figure 5), from a vertical plane P passing through the rotation axis X; in this manner a mechanical moment is generated causing the overturning of the filled container 2 to the unloading position P2, as Figure 6 shows.

The apparatus 1 comprises a programmable weighing and control unit 3, operationally connected to the container 2 and comprising weight sensor means 4a, 4b.

The weight sensor means 4a, 4b support the container 2.

In particular, the weight sensor means comprise a first weighing bar 4a and a second weighing bar 4b that support the container 2 on opposite sides.

The weighing bars 4a, 4b, each include a number of load cells or equivalent weight transducers.

The first weighing bar 4a and the second weighing bar 4b are mounted on suitable anti-vibration elements 11 fixed to the supporting structure 10.

The first weighing bar 4a and second weighing bar 4b extend parallel to one another and on opposite sides with respect to the container 2.

The apparatus 1 comprises a supply unit 5 operationally connected to the aforesaid programmable weighing and control unit 3 and configured for selectively supplying to the container 2 the desired dosed quantities of treatment substances S1, S2 and the washing substance W, such as water taken from the mains water supply.

The supply unit 5 comprises a first supplying unit 5a for a first substance S1, such as liquid detergent, a second supply unit 5b for a second substance S2, such as caustic soda, and a third supply unit 5c for a washing substance, in particular washing water W.

The first supplying unit 5a is connected to a first receptacle 12 or other suitable storage element containing the first substance S1.

The second supply unit 5b is connected to a second receptacle 13 or other suitable storage element containing the second substance S2.

The third supply unit 5c is connected to a connection 14 of the mains water supply.

The supply units 5a, 5b, 5c each include a respective dispensing conduit C that pours the substances S1, S2, W from above into the container 2.

The supply units 5a, 5b, 5c can comprise pump devices, and/or solenoid valve units, or other suitable systems for taking and delivering the requested substances.

The programmable weighing and control unit 3 is configured for initially activating the first supply unit 5a to supply and detect the weight of the first quantity of liquid detergent S1, or anyway in general the first treatment substance S1, accumulated in the container 2, and for stopping the supply thereof when a first preset weight value V1 is reached.

The first weight value V1 can be freely set in the programmable weighing and control unit 3 according to the process needs.

Similarly, the weighing and control unit 3 is programmable in such a manner that, after dosing the first substance S1, it activates the second supply unit 5b to dose by weighing the second substance S2, in this case caustic soda, or another desired substance, until a second requested weight value V2 is reached.

The weighing and control unit 3 is configured in such a manner as to - once the dosed quantities of the treatment substances S1 and S2 have been introduced into the container - activate the third supply unit 5c to supply water to reach the reference weight value V_{R} that is such as to cause the container 2 to overturn and the content thereof to be poured to the bottom of the tank casing 8 where, through the opening 9 for draining, it is conveyed to the washing modules of the recycling system of the plastics.

The supply sequence of the treatment substances S1, S2, in this case of caustic soda and liquid detergent, can be chosen freely. Further, by configuring the supply unit 5 suitably, it is possible to supply, in a controlled and ponderal manner, a different desired number of substances, for example more than two treatment substances or add other substances of a different nature if the need therefore should arise.

The apparatus 1 further comprises position sensor means 6 operationally connected to the programmable weighing and control unit 3.

The position sensor means 6 are configured for monitoring the oscillating movement of the container 2 following unloading of the content S1, S2, W thereof, and providing a reference signal indicating the arrest of the container 2 in the loading position PI for enabling receipt and loading of further doses of treatment substances S1, S2. In particular, the position sensor means comprises an inductive proximity switch 6.

The inductive proximity switch 6 is mounted in a stationary position on a bracket 15 of the supporting structure of the apparatus 1.

The inductive proximity switch 6 is situated near a corner portion 16 of a wall of the container 2.

The inductive proximity switch 6 interacts without contact with the container 2, which is made of ferromagnetic material, or with an interaction element made of ferromagnetic material fixed to the container 2. The variation in the electromagnetic field due to the presence in the vicinity of the ferromagnetic material in oscillating movement (the corner of the container 2, or a plate of metal fixed to the wall thereof) is translated into signals that suitably processed by the unit 3 provide an indication of the position of the container 2.

It is also possible to provide more than one inductive proximity switch 6.

The absence of mechanical actuating mechanisms and of physical contact between the proximity sensor and the container 2, and the peculiarity of the inductive proximity sensor 6 of not being influenced by dust or fragments of non-ferromagnetic materials in the vicinity further contributes to the reliability of use of the apparatus 1 in the ambit of plastics recycling.

In all cases, alternatively to the inductive proximity switch 6, one or more proximity sensors of another type, for example of optical type, can be used, or another equivalent type provided that they are suitable for operating without being influenced by the presence of dust or particles of materials that may become placed between the sensor and the container 2.

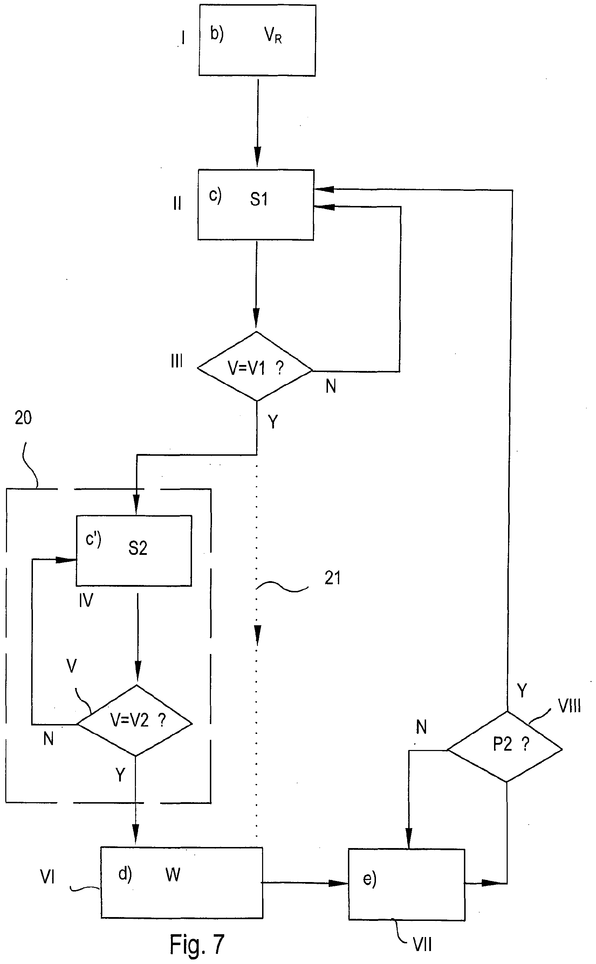

The operation of the apparatus 1 is disclosed below with the help of the block diagram of Figure 7.

Once the weight reference value V_{R} has been stored in the weighing and control unit 3 (block "I" in figure 7, step b) of the method) that causes the autonomous overturning of the container 2 and which thus depends on the structural and geometric configuration of the container 2, the apparatus 1 is ready to operate. In the weighing and control unit 3 the first weight value V1 and the second weight value V2 are set that are associated respectively with the first treatment substance S1 (liquid detergent) and with the second treatment substance S2 (caustic soda) to be dosed in a weighted manner. At this point, the weighing and control unit 3 activates the supply unit 5, in particular the first supply unit 5a, which supplies to the container 2 the liquid detergent S1 (block "II", step c)). When the weight V detected by the unit 3, owing to the signals of the weight sensors 4a, 4b, is equal to the first value VI, the supply of the liquid detergent S1 is interrupted. This step is represented by control block "III", shown in Figure 7.

At this point, (block "IV", step c')) the second supply unit 5b is activated to pour the caustic soda into the container 2. Similarly, when the new weight detected by the unit 3 corresponds to the reaching of the desired ponderal quantity of caustic soda (second weight value V2, indicated in the second control block "V"), the supply is interrupted and at this point the unit 3 activates the third supply unit 5c to introduce into the container 2 a quantity of water W (block "VI", step d)) that is sufficient to cause the container 2 to overturn by gravity.

At the end of unloading, the container 2 oscillates to the loading position PI, whilst the proximity sensor 6 monitors the movement thereof (block "VII", step e)). When the oscillating movement of the container 2 terminates, i.e. the stationary state is detected of the container 2 in the loading position P2 (control block "VIII"), the apparatus 1 is ready for starting a new dosing cycle (new step c) represented by block "II").

The apparatus 1 that has just been disclosed has great operational versatility. Owing to the programmable weighing and control unit 3, the apparatus 1 can operate in several modes. For example, it is possible to program the programmable weighing and control unit 3 so as to dose only one treatment substance; in this case the unit 3 will intervene to complete filling of the container 2 by supplying water to the container 2 until the aforementioned weight reference value V_{R} is reached. This possible operating mode, with reference to the diagram of Figure 7, is symbolically represented by the connection of the control block "III", by the flow line 21, directly to the block "VI", (step d)) i.e. bypassing the module 20 (which comprises blocks "IV" abd "V").

According to another operating mode, two treatment substances S1, S2 are supplied in sequence, in weighted doses, the sum of which equals perfectly the reference value V_{R}, thus without the need to also add water. In other words, at the end of pouring of the dosed quantity of the substance S2 when the reference weight value V_{R} is reached, the container 2 overturns independently.

From what has been disclosed above, it is clear that the apparatus 1 has a reduced number of structural components, and is devoid of mechanical driving members for driving the container. Also the minimal presence of electric/electronic parts near the container 2, which is limited to the two weighing bars 4a, 4b, and to the proximity sensor 6, makes the apparatus 1 advantageously indicated for use in corrosive environments as occurs in the ambit of plastics recycling.

From what has been said and shown in the attached drawings, it is clear that a method and apparatus for the weight dosage have been provided that achieve the preset objects successfully.

In particular, owing to the invention an apparatus is provided that is extremely simplified structurally and functionally, which is of significantly advantageous use in corrosive environments, simultaneously ensures satisfactory efficacy and operating precision and permits easy and versatile adjusting of the ponderal doses of the treatment substances intended for the delivery into the plastics washing and recycling line.

## Claims

1. Method for dosing one or more treatment substances (S1, S2) in a system for washing and recycling plastics, comprising the steps of:
a. providing a container (2) supported in a freely oscillating manner and operationally connected to a programmable weighing and control unit (3), said container (2) being overturnable by gravity between a loading position (P1) and an unloading position (P2) of said one or more treatment substances;
b. storing in said weighing and control unit (3) a reference value (V_{R}) of a weight which is suitable to cause overturning of said container (2) to said unloading position (P2);
c. supplying a treatment substance (S1) to said container (2), detecting the weight thereof, and stopping the supply of said treatment substance (S1) upon reaching a preset weight value (V1); and
d. supplying to said container (2) a washing substance (W) until said reference value (V_{R}) is reached causing said container (2) to overturn through the force of gravity in said unloading position (P2) for unloading and sending said treatment substance (S1) to plastics washing modules included in said system.

2. Method according to claim 1, wherein, in said step a), there is provided arranging said container (2) so as to be supported rotatably around a horizontal rotation axis (X) by said weighing and control unit (3), and positioning said rotation axis (X) eccentrically above the centre of gravity (B1) of said empty container (2), in a position that is such that on reaching said reference weight value (V_{R}), the new centre of gravity (B2) of said filled container (2) is spaced away from a vertical plane (P) passing through said rotation axis (X), so as to generate a mechanical moment causing the overturning of said filled container (2) to the unloading position (P2).

3. Method according to claim 1 or 2, wherein said step c) of supplying said treatment substance (S1) is followed by a step c') of supplying a further treatment substance (S2) with detecting of the weight of the content that has progressively accumulated in said container (2), wherein supplying said further treatment substance (S2) is arrested on reaching a further preset weight value (V2), after said step c') there being started said step d) of supplying washing substance until said reference value (V_{R}) is reached to cause the overturning by gravity of said container (2) to said unloading position (P2).

4. Method according to any preceding claim, wherein a step e) is provided of monitoring the oscillating movement of said container (2) subsequent to the unloading of the contents (S1, S2, W) thereof to identify the arrest thereof and the reaching again of said first loading position (P1) so as to start the receipt and loading of a further dose of said one or more treatment substances (S1, S2).

5. Method according to any preceding claim, wherein said treatment substance (S1) comprises a liquid detergent, said further treatment substance (S2) comprises caustic soda and said washing substance (W) comprises water.

6. Method according to any preceding claim, wherein said steps c) and c') comprise pumping liquid detergent and caustic soda respectively, said step d) comprise pumping water into said container (2), and said plastics comprise PET material.

7. Apparatus for dosing one or more treatment substances (S1, S2) in a system for washing and recycling plastics, by the method according to claim 1, comprising:
- a container (2) supported in a freely oscillating manner and overturnable by gravity from a loading position (P1) to an unloading position (P2) of said one or more treatment substances (S1, S2) on reaching a reference weight value (V_{R}),
- a programmable weighing and control unit (3), operationally connected to said container (2) and comprising weight sensor means (4a, 4b) supporting said container (2),
- a supply unit (5) operationally connected to said weighing and control unit (3) and configured for selectively supplying to said container (2) dosed quantities of one or more treatment substances (S1, S2) and of a washing substance (W);
- said programmable weighing and control unit (3) being configured for initially activating said supply unit (5) to supply and detect the weight of a first quantity of treatment substance (S1) in said container (2), stopping supplying upon reaching a preset weight value, and subsequently activating said supply unit (5) to supply to said container (2) a quantity of washing substance (W) until said reference value (V_{R}) is reached to cause the overturning by gravity of said container (2) to said unloading position (P2).

8. Apparatus according to the preceding claim, further comprising position sensor means (6) operationally connected to said programmable weighing and control unit (3) and configured for monitoring the oscillating movement of said container (2) subsequent to the discharging of the content (S1, S2, W) thereof and supplying a reference signal indicating the stop of said container (2) in said loading position (P1) to enable the receipt and charging of a further dose of said one or more treatment substance (S1, S2).

9. Apparatus according to the preceding claim, wherein said position sensor means comprise one or more inductive proximity switches (6).

10. Apparatus according to claim 7 or 8, wherein said position sensor means (6) comprise one or more optical positioning sensors.

11. Apparatus according to any one of claims 7 to 10, wherein said weight sensors means comprise a first weighing bar (4a) and a second weighing bar (4b) on which rotation pins (7) are pivotally mounted supporting, at opposite sides, said container (2).

12. Apparatus according to any one of claims 7 to 11 wherein said supply unit (5) comprises a first supplying unit (5a), a second supplying unit (5b) and a third supplying unit (5b) that are suitable for sending to said container (2) respectively, a liquid detergent (S1), caustic soda (S2), and washing water (W).

13. Apparatus according to any one of claims 7 to 12, wherein said container (2) is housed inside a tank casing (8) provided below with an opening (9) for draining the content (S1, S2, W) from the container (2) to plastics washing modules of said system, in said tank casing (8) there being provided a supporting structure (10) having anti-vibration elements (11) on which said weight sensor (4) means supporting said container (2) are mounted.

## Patentansprüche

1. Verfahren zum Dosieren von einer oder mehreren Behandlungssubstanzen (S1, S2) in einem System zum Waschen und Recyceln von Kunststoffen, das die Schritte umfasst des:
a) Vorsehens eines Behälters (2), der in einer frei schwingenden Weise gelagert und betriebsmäßig mit einer programmierbaren Wäge- und Steuereinheit (3) verbunden ist, wobei der Behälter (2) durch Schwerkraft zwischen einer Beladestellung (P1) und einer Entladestellung (P2) der einen oder mehreren Behandlungssubstanzen gekippt werden kann;
b) Speicherns eines Referenzwerts (V_{R}) eines Gewichts, das dazu geeignet ist, Kippen des Behälters (2) in die Entladestellung (P2) zu bewirken, in der Wäge- und Steuereinheit (3);
c) Zuführens einer Behandlungssubstanz (S1) zum Behälter (2), Erfassens des Gewichts derselben, und Stoppens der Zufuhr der Behandlungssubstanz (S1) bei Erreichen eines voreingestellten Gewichtswerts (V1); und
d) Zuführens einer Waschsubstanz (W) zum Behälter (2), bis der Referenzwert (V_{R}) erreicht ist, der bewirkt, dass der Behälter (2) durch die Schwerkraft in die Entladestellung (P2) kippt, um die Behandlungssubstanz (S1) zu entladen und zu Kunststoffwaschmodulen, die im System eingeschlossen sind, zu schicken.

2. Verfahren nach Anspruch 1, wobei im Schritt a) vorgesehen ist, den Behälter (2) so anzuordnen, dass er durch die Wäge- und Steuereinheit (3) um eine horizontale Drehachse (X) drehbar gelagert ist, und die Drehachse (X) exzentrisch über dem Schwerpunkt (B1) des leeren Behälters (2) in einer Stellung zu positionieren, die derart ist, dass bei Erreichen des Referenzgewichtswerts (V_{R}) der neue Schwerpunkt (B2) des gefüllten Behälters (2) von einer vertikalen Ebene (P), die durch die Drehachse (X) verläuft, entfernt liegt, um ein mechanisches Moment zu erzeugen, das das Kippen des gefüllten Behälters (2) in die Entladestellung (P2) bewirkt.

3. Verfahren nach Anspruch 1 oder 2, wobei dem Schritt c) des Zuführens der Behandlungssubstanz (S1) ein Schritt c') des Zuführens einer weiteren Behandlungssubstanz (S2) mit Erfassen des Gewichts des Inhalts folgt, der sich nach und nach im Behälter (2) angesammelt hat, wobei das Zuführen der weiteren Behandlungssubstanz (S2) bei Erreichen eines weiteren voreingestellten Gewichtswerts (V2) angehalten wird, wobei nach dem Schritt c') der Schritt d) des Zuführens von Waschsubstanz gestartet wird, bis der Referenzwert (V_{R}) erreicht wird, um das Kippen des Behälters (2) durch Schwerkraft in die Entladestellung (P2) zu bewirken.

4. Verfahren nach einem vorstehenden Anspruch, wobei ein Schritt e) vorgesehen ist des Überwachens der schwingenden Bewegung des Behälters (2) im Anschluss an das Entladen der Inhalte (S1, S2, W) desselben, um das Anhalten derselben und das erneute Erreichen der ersten Beladestellung (P1) zu identifizieren, um das Empfangen und Laden einer weiteren Dosis der einen oder mehreren Behandlungssubstanzen (S1, S2) zu starten.

5. Verfahren nach einem vorstehenden Anspruch, wobei die Behandlungssubstanz (S1) ein flüssiges Reinigungsmittel umfasst, die weitere Behandlungssubstanz (S2) Ätznatron umfasst, und die Waschsubstanz (W) Wasser umfasst.

6. Verfahren nach einem vorstehenden Anspruch, wobei die Schritte c) und c') jeweils das Pumpen von flüssigem Reinigungsmittel und von Ätznatron umfassen, der Schritt **d)** das Pumpen von Wasser in den Behälter (2) umfasst, und die Kunststoffe PET-Material umfassen.

7. Vorrichtung zum Dosieren von einer oder mehreren Behandlungssubstanzen (S1, S2) in einem System zum Waschen und Recyceln von Kunststoffen nach dem Verfahren nach Anspruch 1, umfassend:
- einen Behälter (2), der in einer frei schwingenden Weise gelagert ist und bei Erreichen eines Referenzgewichtswerts (V_{R}) durch Schwerkraft aus einer Beladestellung (P1) in eine Entladestellung (P2) der einen oder mehreren Behandlungssubstanzen (S1, S2) gekippt werden kann,
- eine programmierbare Wäge- und Steuereinheit (3), die betriebsmäßig mit dem Behälter (2) verbunden ist und Gewichtssensormittel (4a, 4b) umfasst, die den Behälter (2) tragen,
- eine Zuführeinheit (5), die betriebsmäßig mit der Wäge- und Steuereinheit (3) verbunden und dafür konfiguriert ist, dem Behälter (2) selektiv dosierte Mengen von einer oder mehreren Behandlungssubstanzen (S1, S2) und einer Waschsubstanz (W) zuzuführen;
- wobei die programmierbare Wäge- und Steuereinheit (3) dafür konfiguriert ist, die Zuführeinheit (5) anfangs so zu aktivieren, dass eine erste Menge von Behandlungssubstanz (S1) zugeführt und das Gewicht derselben im Behälter (2) erfasst wird, bei Erreichen eines voreingestellten Gewichtswert die Zufuhr zu stoppen, und anschließend die Zuführeinheit (5) so zu aktivieren, dass dem Behälter (2) eine Menge von Waschsubstanz (W) zugeführt wird, bis der Referenzwert (V_{R}) erreicht ist, um das Kippen des Behälters (2) durch Schwerkraft in die Entladestellung (P2) zu bewirken.

8. Vorrichtung nach dem vorstehenden Anspruch, weiter Positionssensormittel (6) umfassend, die betriebsmäßig mit der programmierbaren Wäge- und Steuereinheit (3) verbunden und dafür konfiguriert sind, die schwingende Bewegung des Behälters (2) im Anschluss an das Entladen des Inhalts (S1, S2, W) desselben zu überwachen und ein Referenzsignal zu liefern, das den Stopp des Behälters (2) in der Beladestellung (P1) anzeigt, um das Empfangen und das Laden einer weiteren Dosis der einen oder mehreren Behandlungssubstanzen (S1, S2) zu ermöglichen.

9. Vorrichtung nach dem vorstehenden Anspruch, wobei die Positionssensormittel einen oder mehrere induktive Näherungsschalter (6) umfassen.

10. Vorrichtung nach Anspruch 7 oder 8, wobei die Positionssensormittel (6) einen oder mehrere optische Positioniersensoren umfassen.

11. Vorrichtung nach einem der Ansprüche 7 bis 10, wobei die Gewichtssensormittel einen ersten Wiegestab (4a) und einen zweiten Wiegestab (4b) umfassen, an denen Drehstifte (7) schwenkbar angebracht sind, die den Behälter (2) an gegenüberliegenden Seiten tragen.

12. Vorrichtung nach einem der Ansprüche 7 bis 11, wobei die Zuführeinheit (5) eine erste Zuführeinheit (5a), eine zweite Zuführeinheit (5b) und eine dritte Zuführeinheit (5b) umfasst, die dafür geeignet sind, jeweils ein flüssiges Reinigungsmittel (S1), Ätznatron (S2) und Waschwasser (W) zum Behälter (2) zu schicken.

13. Vorrichtung nach einem der Ansprüche 7 bis 12, wobei der Behälter (2) in einem Tankgehäuse (8) untergebracht ist, das unten mit einer Öffnung (9) zum Ablassen des Inhalts (S1, S2, W) aus dem Behälter (2) zu Kunststoffwaschmodulen des Systems versehen ist, wobei in dem Tankgehäuse (8) eine Tragstruktur (10) vorgesehen ist, die schwingungsdämpfende Elemente (11) aufweist, auf denen die den Behälter (2) tragenden Gewichtssensormittel (4) angebracht sind.

## Revendications

1. Procédé de dosage d'une ou plusieurs substances de traitement (S1, S2) dans un système de lavage et de recyclage de plastiques, comprenant les étapes suivantes :
a. fourniture d'un récipient (2) supporté de manière à pouvoir osciller librement et relié fonctionnellement à une unité de pesage et de commande programmable (3), ledit récipient (2) pouvant se renverser par gravité entre une position de chargement (P1) et une position de déchargement (P2) desdites une ou plusieurs substances de traitement ;
b. stockage dans ladite unité de pesage et de commande programmable (3) d'une valeur de référence (V_{R}) d'un poids qui est adéquat pour entraîner le renversement dudit récipient (2) dans ladite position de déchargement (P2) ;
c. introduction d'une substance de traitement (S1) dans ledit récipient (2), en détectant son poids, et interruption de l'introduction de ladite substance de traitement (S1) lorsqu'une valeur de poids prédéfinie (V1) est atteinte ; et
d. introduction dans ledit récipient (2) d'une substance de lavage (W) jusqu'à ce que ladite valeur de référence (V_{R}) soit atteinte, provoquant le renversement dudit récipient (2) par la force de gravité dans ladite position de déchargement (P2) afin de décharger et d'envoyer ladite substance de traitement (S1) à des modules de lavage de plastiques inclus dans ledit système.

2. Procédé selon la revendication 1, dans lequel, à ladite étape a), est prévu l'agencement dudit récipient (2) pour qu'il soit supporté de manière rotative autour d'un axe de rotation horizontal (X) par ladite unité de pesage et de commande (3), et le positionnement dudit axe de rotation (X) de manière décentrée au-dessus du centre de gravité (B1) dudit récipient (2) vide, dans une position telle que lorsque ladite valeur de poids de référence (V_{R}) est atteinte, le nouveau centre de gravité (B2) dudit récipient (2) rempli est espacé d'un plan vertical (P) passant par ledit axe de rotation (X), pour générer un moment mécanique entraînant le renversement dudit récipient (2) rempli à la position de décharge (P2).

3. Procédé selon la revendication 1 ou 2, dans lequel ladite étape c) d'introduction de ladite substance de traitement (S1) est suivie par une étape c') d'introduction d'une substance de traitement supplémentaire (S2) avec la détection du poids du contenu qui s'est progressivement accumulé dans ledit récipient (2), dans lequel l'introduction de ladite substance de traitement supplémentaire (S2) est interrompue lorsqu'une autre valeur de poids prédéfinie (V2) est atteinte, étant débutée, après ladite étape c'), ladite étape d) d'introduction d'une substance de lavage jusqu'à ce que ladite valeur de référence (V_{R}) soit atteinte pour entraîner le renversement par gravité dudit récipient (2) dans ladite position de déchargement (P2).

4. Procédé selon l'une quelconque des revendications précédentes, dans lequel est prévue une étape e) de surveillance du mouvement d'oscillation dudit récipient (2) après le déchargement des contenus (S1, S2, W) de celui-ci pour identifier son interruption et la nouvelle atteinte de ladite première position de chargement (P1) pour commencer la réception et le chargement d'une dose supplémentaire d'une ou plusieurs substances de traitement (S1, S2).

5. Procédé selon l'une quelconque des revendications précédentes, dans lequel ladite substance de traitement (S1) comprend un détergent liquide, ladite substance de traitement supplémentaire (S2) comprend de la soude caustique et ladite substance de lavage (W) comprend de l'eau.

6. Procédé selon l'une quelconque des revendications précédentes, dans lequel lesdites étapes c) et c') comprennent le pompage du détergent liquide et de la soude caustique respectivement, ladite étape **d)** comprend le pompage de l'eau dans ledit récipient (2), et lesdits plastiques comprennent un matériau de PET.

7. Appareil de dosage d'une ou plusieurs substances de traitement (S1, S2) dans un système de lavage et de recyclage de plastiques, par le procédé selon la revendication 1, comprenant :
- un récipient (2) supporté de manière à pouvoir osciller librement et pouvant se renverser par gravité d'une position de chargement (P1) à une position de déchargement (P2) desdites une ou plusieurs substances de traitement (S1, S2) lorsqu'une valeur de poids de référence (V_{R}) est atteinte,
- une unité de pesage et de commande programmable (3), facultativement reliée au dit récipient (2) et comprenant un moyen de détection de poids (4a, 4b) supportant ledit récipient (2),
- une unité d'introduction (5) fonctionnellement reliée à ladite unité de pesage et de commande (3) et configurée pour sélectivement introduire dans ledit récipient (2) des quantités dosées d'une ou plusieurs substances de traitement (S1, S2) et d'une substance de lavage (W) ;
- ladite unité de pesage et de commande programmable (3) étant configurée pour initialement activer ladite unité d'introduction (5) pour introduire et détecter le poids d'une première quantité de substance de traitement (S1) dans ledit récipient (2), l'interruption de la fourniture lors de l'atteinte d'une valeur de poids prédéfinie, et ensuite l'activation de ladite unité d'introduction (5) pour introduire dans ledit récipient (2) une quantité de substance de lavage (W) jusqu'à ce que ladite valeur de référence (V_{R}) soit atteinte pour entraîner le renversement par gravité dudit récipient (2) dans ladite position de déchargement (P2).

8. Appareil selon la revendication précédente, comprenant en outre un moyen de détection de position (6) fonctionnellement relié à ladite unité de pesage et de commande programmable (3) et configurée pour surveiller le mouvement d'oscillation dudit récipient (2) après le déchargement du contenu (S1, S2, W) de celui-ci et l'introduction d'un signal de référence indiquant l'arrêt dudit récipient (2) dans ladite position de chargement (P1) pour permettre la réception et le chargement d'une dose supplémentaire desdites une ou plusieurs substances de traitement (S1, S2).

9. Appareil selon la revendication précédente, dans lequel ledit moyen de détection de position comprend un ou plusieurs commutateurs de proximité inductifs (6).

10. Appareil selon la revendication 7 ou 8, dans lequel ledit moyen de détection de position (6) comprend un ou plusieurs capteurs de positionnement optiques.

11. Appareil selon l'une quelconque des revendications 7 à 10, dans lequel ledit moyen de détection de poids comprend une première barre de pesée (4a) et une seconde barre de pesée (4b) sur laquelle des broches rotatives (7) sont montées de façon pivotante supportant, au niveau de côtés opposés, ledit récipient (2).

12. Appareil selon l'une quelconque des revendications 7 à 11, dans lequel ladite unité d'introduction (5) comprend une première unité d'introduction (5a), une deuxième unité d'introduction (5b) et une troisième unité d'introduction (5b) qui sont adaptées à envoyer dans ledit récipient (2) respectivement, un détergent liquide (S1), de la soude caustique (S2), et de l'eau de lavage (W).

13. Appareil selon l'une quelconque des revendications 7 à 12, dans lequel ledit récipient (2) est reçu à l'intérieur d'un caisson de cuve (8) doté dans le fond d'une ouverture (9) pour drainer le contenu (S1, S2, W) du récipient (2) vers les modules de lavage de plastiques dudit système, dans ledit caisson de cuve (8) une structure de support (10) étant fournie qui a des éléments anti-vibration (11) sur lesquels est monté ledit moyen de détection de poids (4) supportant ledit récipient (2).
